(19) Europäisches Patentamt
European Patent Office
Office européen des brevets

(11) **EP 4 133 909 B1**

(12) **EUROPÄISCHE PATENTSCHRIFT**

(45) Veröffentlichungstag und Bekanntmachung des Hinweises auf die Patenterteilung:
**13.03.2024 Patentblatt 2024/11**

(21) Anmeldenummer: **21716077.9**

(22) Anmeldetag: **23.03.2021**

(51) Internationale Patentklassifikation (IPC):
**H05B 47/11** (2020.01) **H05B 47/115** (2020.01)
**H05B 47/155** (2020.01) **H05B 47/16** (2020.01)

(52) Gemeinsame Patentklassifikation (CPC):
**H05B 47/11; H05B 47/115; H05B 47/155; H05B 47/16;** Y02B 20/40

(86) Internationale Anmeldenummer:
**PCT/EP2021/057472**

(87) Internationale Veröffentlichungsnummer:
**WO 2021/204538 (14.10.2021 Gazette 2021/41)**

(54) **VERFAHREN UND SYSTEM ZUR HELLIGKEITSREGELUNG VON INNENRAUMBELEUCHTUNGSMITTELN**

METHOD AND SYSTEM FOR REGULATING THE BRIGHTNESS OF INTERIOR LIGHTING MEANS

PROCÉDÉ ET SYSTÈME DE RÉGULATION DE LA LUMINOSITÉ DE MOYENS D'ÉCLAIRAGE D'INTÉRIEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2020 DE 102020109523**

(43) Veröffentlichungstag der Anmeldung:
**15.02.2023 Patentblatt 2023/07**

(73) Patentinhaber: **Steinel GmbH**
**33442 Herzebrock-Clarholz (DE)**

(72) Erfinder:
• **DUST, Christian**
**33442 Herzebrock-Clarholz (DE)**
• **BORN, Torsten**
**33813 Oerlinghausen (DE)**

(74) Vertreter: **Müller Hoffmann & Partner Patentanwälte mbB**
**St.-Martin-Strasse 58**
**81541 München (DE)**

(56) Entgegenhaltungen:
DE-A1-102010 003 804    US-A1- 2018 168 020

**Beschreibung**

Die Erfindung betrifft ein Verfahren zur Helligkeitsregelung von Innenraumbeleuchtungsmitteln. Ferner betrifft die Erfindung ein System zur Durchführung eines solchen Verfahrens. Insbesondere betrifft die Erfindung eine tageslichtabhängige Lichtsteuerung mit Kamerasensorik.

An Büroarbeitsplätzen muss eine definierte Beleuchtung (i.d.R. 500 lx) sichergestellt sein. Gleichzeitig haben Büros in der Regel auch Fenster, so dass das einfallende Tageslicht zur Beleuchtung beiträgt und dadurch Energie eingespart werden kann. Allerdings gibt es bis heute keinen effizienten Weg, die am Arbeitsplatz einfallende Lichtmenge exakt zu messen.

Aus dem Stand der Technik sind Verfahren zur Helligkeitsregelung von Innenraumbeleuchtungsmitteln bekannt, bei denen Lichtsensoren, beispielsweise Fototransistoren, eingesetzt werden, die einen von der einfallenden Lichtmenge modulierten Durchlassstrom aufweisen. Dabei wird eine Kalibration mit einem Luxmeter benötigt, normalerweise nachts, um den Beitrag des künstlichen Lichtes zur Gesamthelligkeit unbeeinflusst vom Tageslicht messen zu können. Des Weiteren ist es erforderlich, für jeden individuellen Regelbereich im Innenraum einen eigenständigen Sensor zu installieren.

US 2018/0168020 A1 beschreibt einen Sensor für sichtbares Licht, der so konfiguriert werden kann, dass er die Umgebungsmerkmale eines Raumes anhand eines Bildes des Raumes erfasst. Der Sensor für sichtbares Licht kann in einem oder mehreren Modi gesteuert werden, einschließlich eines Tageslichtblendungssensormodus, eines Tageslichtsensormodus, eines Farbsensormodus und/oder eines Belegungs-/Leerstandssensormodus. Im Tageslichtblendsensormodus kann der Sensor für sichtbares Licht so konfiguriert sein, dass er die Blendwirkung in einem Raum verringert oder beseitigt. Im Tageslichtsensormodus und im Farbsensormodus kann der Sensor für sichtbares Licht so konfiguriert sein, dass er eine bevorzugte Lichtmenge bzw. Farbtemperatur im Raum bereitstellt. In der Betriebsart Belegungs-/Leerstandssensor kann der Sensor für sichtbares Licht so konfiguriert sein, dass er einen Belegungs-/Leerstandszustand im Raum erkennt und eine oder mehrere Steuereinrichtungen entsprechend der Belegung oder dem Leerstand des Raums einstellt. Der Sensor für sichtbares Licht kann so konfiguriert werden, dass er die Privatsphäre der Benutzer innerhalb des Raums über eine Software, ein entfernbares Modul und/oder einen speziellen Sensor schützt.

Bei solchen bekannten Verfahren wird die Regelung mit steigendem Anteil von Tageslicht immer ungenauer. Das liegt u.a. daran, dass der Lichtsensor (der auch ein Kamerasensor sein kann) bei steigender Tageslichthelligkeit immer mehr reflektierte Helligkeit oder auch infraroten Lichtanteil wahrnimmt. Der durch den Sensor gemessene Helligkeitswert ist dadurch meist größer als der tatsächliche auf einer Zielfläche mit einem Luxmeter ermittelte Helligkeitswert.

Diese hellere Wahrnehmung durch den Lichtsensor führt dazu, dass die Beleuchtungsregelung zu weit herunter regelt, und der Helligkeitssollwert auf der Zielfläche nicht erreicht wird. Dieses Verhalten wird im Stand der Technik durch zusätzliche Offsets korrigiert, wodurch die Lichtmenge den größten Teil des Tages zu hoch ist und damit Energie verschwendet wird.

Weiterhin ist es sehr schwierig, mit einem einzelnen Sensor die auf einen Arbeitsplatz einfallende Lichtmenge exakt zu messen. Lichtsensoren arbeiten in der Regel diffus, liefern also nur den Mittelwert einer Beleuchtung im Raum. Es wurden auch bereits fokussierte Sensoren und Sensoren direkt auf dem Schreibtisch eingesetzt. Beide sind aber stark abhängig von der Umgebung (Laptops, Taschen, Jacken, Menschen) und speziell letztere gefährdet, beispielsweise durch Vandalismus.

Der Erfindung liegt demnach die Aufgabe zugrunde, ein Verfahren sowie ein System zu schaffen, welche eine möglichst exakte Regelung der Helligkeit von Innenraumbeleuchtungsmitteln auf einen Zielwert ermöglichen.

Diese Aufgabe wird durch das Verfahren nach Anspruch 1 sowie das System nach Anspruch 10 gelöst. Vorteilhafte Ausgestaltungen und Weiterbildungen der Erfindung sind in den Unteransprüchen angegeben.

Erfindungsgemäß ist ein Verfahren zur Helligkeitsregelung von Zielzonen-Beleuchtungsmitteln, die eine Innenraumzielzone eines Innenraums beleuchten, vorgesehen. Das Verfahren umfasst folgende Schritte: optisches Abbilden zumindest eines Teils des Innenraums auf ein Innenraumbild durch ortsaufgelöste Helligkeitssensormittel; Bestimmen eines aktuellen Helligkeitswertevektors, deren Komponenten $\alpha_i(t)$ aktuellen integrierten Helligkeitswerten einer i-ten Innenraumbildzone entsprechen; Bestimmen eines Zielzonenhelligkeitsregelwertes aus dem Skalarprodukt des aktuellen Helligkeitswertevektors und eines Zielzonenkalibrierungsvektors, der einer Innenraumzielzone zugeordnet ist; und Regeln des Zielzonenhelligkeitsregelwertes auf einen Zielzonenhelligkeitssollwert durch Anpassung der Beleuchtungsstärke der Zielzonen-Beleuchtungsmittel. Dadurch kann der Regelwert für die Helligkeitsregelung von Zielzonen-Beleuchtungsmitteln sehr genau bestimmt werden. Ferner ist es dadurch möglich, mehrere Beleuchtungsmittel unabhängig voneinander zu regeln, wobei hierfür nur ein Sensor benötigt wird. Als Folge kann Energie erheblich eingespart werden.

Erfindungsgemäß ist also ein Verfahren zur Helligkeitsregelung von Zielzonen-Beleuchtungsmitteln vorgesehen, bei dem das Kamerabild eines kamerabasierten Sensors in mehrere Zonen unterteilt wird, die unterschiedlich gewichtet für Kalibration, Lichtmessung und Regelung verwendet werden. Das von der Kamera aufgenommene Bild wird in Bezug auf die Bildhelligkeit analysiert. Dies geschieht individuell für jede im Sensor konfigurierte Zone. Der Sensor ist hierdurch in der Lage, Helligkeitswerte, welche eine lineare Abhängigkeit zur tatsächlichen Helligkeit in der Zone aufweisen, auszugeben. Um eine genaue Lichtregelung zu erreichen, müssen die Zonen-Helligkeitswerte kalibriert werden. Das besondere an der Kalibrierung ist, dass alle Ziel-Messzonen in Zusammenhang mit einer Zone kalibriert werden, welche ausschließlich das einfallende Tageslicht aufzeichnet.

Die Helligkeitssensormittel können ein Photodiodenarray oder eine Kamera umfassen. Hierdurch kann eine notwendige Ortsauflösung erreicht werden.

Der Innenraum kann einen Gebäudeinnenraum umfassen und die Innenraumbildzonen können unterschiedlichen Raumbereichen des Gebäudeinnenraumes entsprechen, deren Reflexionseigenschaften im Wesentlichen unverändert bleiben. Dadurch werden reflexionsbedingte Störungen oder Schwankungen in den Werten des Helligkeitswertevektors vermieden. Folglich kann eine genaue Bestimmung des Zielzonenhelligkeitsregelwertes erfolgen.

Die Komponenten $\lambda_i$ des Zielzonenkalibrierungsvektors können durch Lösen des linearen Gleichungssystems

$$\Sigma_i\ \alpha_{ji}\ \lambda_i\ =\ K_j$$

bestimmt werden, wobei Index i der i-ten Innenraumbildzone, $\alpha_{ij}$ dem integrierten Helligkeitswert der i-ten Innenraumbildzone zu unterschiedlichen Tageszeiten oder Beleuchtungssituationen j und $K_j$ den zur Tageszeit oder Beleuchtungssituation j durch einen Luxmeter gemessenen Helligkeitswerten in der Innenraumzielzone entspricht. Dadurch kann eine exakte Kalibrierung des Helligkeitswertevektors erfolgen, so dass aus den Werten des Helligkeitswertevektors und des Zielzonenkalibrierungsvektors ein zu einer genauen Regelung der Zielzonen-Beleuchtungsstärke geeigneter Zielzonenhelligkeitsregelwert bestimmt werden kann.

Bei der Bestimmung des Zielzonenkalibrierungsvektors ist es vorteilhaft, wenn bei der Bestimmung des Zielzonenkalibrierungsvektors der durch das Luxmeter gemessene Helligkeitswert $K_j$ ein nur über den sichtbaren Spektralbereich integrierter Wert ist, wobei der durch die Helligkeitssensormittel bestimmte Helligkeitswert der i-ten Innenraumbildzone $\alpha_{ij}$ ein sowohl über den sichtbaren Spektralbereich als auch über einen nicht sichtbaren Spektralbereich integrierter Wert ist. Dadurch wird verhindert, dass bei einem sehr starken Tageslichtanteil mit hohem Infrarotanteil (im Gegensatz zu einer künstlichen Beleuchtungsquelle mit niedrigem Infrarotanteil) die Zielzonenhelligkeit im sichtbaren Spektralbereich heruntergeregelt wird, da der Infrarotanteil fälschlicherweise für die Bestimmung der Helligkeit im sichtbaren Spektralbereich mit einbezogen wird. Es können also spektrale Verfälschungen der durch die Helligkeitssensormittel gemessenen Helligkeitswerte vermieden werden.

Eine Innenraumbildzone kann einem Fensterbereich entsprechen. Dadurch kann der Beitrag des Tageslichts zur Helligkeit im Innenraum ermittelt werden.

Die Komponente des Zielzonenkalibrierungsvektors, die der einem Fensterbereich entsprechenden Innenraumbildzone entspricht, kann negativ sein. Dadurch kann bei der Kalibrierung des Helligkeitswertevektors der Einfluss des Tageslichts eliminiert werden.

Das Verfahren kann ferner einen Anwesenheitserfassungsschritt umfassen, bei dem eine Anwesenheit von Personen in den Innenraumbildzonen erfasst wird, wobei Innenraumbildzonen, in denen die Anwesenheit von Personen erkannt wurde, nicht zur Bestimmung der Komponenten des aktuellen Helligkeitswertevektors benutzt werden. Dadurch kann eine durch eine Anwesenheit von Personen verursachte Verfälschung der Werte des Helligkeitswertevektors vermieden werden.

Die zur Bestimmung der Komponenten des Helligkeitswertevektors benutzten Innenraumbildzonen können im Wesentlichen unveränderlichen Bereichen, insbesondere Wand- und /oder Deckenbereichen des Innenraums entsprechen. Dadurch wird es möglich, Störungen oder Schwankungen in den Werten des Helligkeitswertevektors zu vermeiden, um eine möglichst genaue Bestimmung des Zielzonenhelligkeitsregelwertes zu ermöglichen.

Erfindungsgemäß ist ferner ein System zur Helligkeitsregelung von Zielzonen-Beleuchtungsmitteln, die eine Innenraumzielzone eines Innenraums beleuchten, vorgesehen. Das System umfasst ortsaufgelöste Helligkeitssensormitteln, die dazu eingerichtet sind, zumindest einen Teils des Innenraums auf ein Innenraumbild optisch abzubilden und einen aktuellen Helligkeitswertevektor zu bestimmen, deren Komponenten $\alpha_i(t)$ aktuellen integrierten Helligkeitswerten einer i-ten Innenraumbildzone entsprechen. Das System kann ferner eine Recheneinheit umfassen, die dazu eingerichtet ist, einen Zielzonenhelligkeitsregelwert aus dem Skalarprodukt des aktuellen Helligkeitswertevektors und eines Zielzonenkalibrierungsvektors, der einer Innenraumzielzone zugeordnet ist, zu bestimmen. Weiterhin kann das System eine Regeleinheit umfassen, die dazu eingerichtet ist, den Zielzonenhelligkeitsregelwert auf einen Zielzonenhelligkeitssollwert durch Anpassung der Beleuchtungsstärke der Zielzonen-Beleuchtungsmittel zu regeln. Das Vorsehen eines solchen Systems ermöglicht es, den Regelwert für die Helligkeitsregelung von Zielzonen-Beleuchtungsmittel sehr genau zu bestimmen. Es wird möglich, mehrere Beleuchtungsmittel unabhängig voneinander zu regeln, wobei hierfür nur ein Sensor benötigt wird. Als Folge kann Energie erheblich eingespart werden.

Das System kann ferner Anwesenheitserfassungsmittel umfassen, die dazu eingerichtet sind, eine Anwesenheit von Personen in den Innenraumbildzonen zu erfassen. Dadurch kann eine durch eine Anwesenheit von Personen verursachte Verfälschung der Helligkeitswerte vermieden werden.

Die Regeleinheit kann eine IP-Schnittstelle und/oder eine Systembusschnittstelle umfassen. Beispielsweise kann die Regeleinheit BACnet und/oder DALI kompatibel sein. Dadurch wird eine den üblichen Netzwerkprotokollen für die Gebäudeautomation entsprechende Ansteuerung von Zielzonen-Beleuchtungsmitteln ermöglicht.

Das System kann ferner einen Luxmeter umfassen, der dazu eingerichtet ist, Helligkeitswerte in einer Innenraumzielzone zu messen, um die Vorrichtung vor Aufnahme des Regelbetriebs zu kalibrieren. Dadurch kann eine exakte Kalibrierung der Helligkeitswerte erfolgen, so dass ein zu einer genauen Regelung der Zielzonen-Beleuchtungsstärke geeigneter Zielzonenhelligkeitsregelwert bestimmt werden kann.

Die Regeleinheit kann dazu eingerichtet sein, in zeitlichen Abständen von weniger als einer Sekunde oder weniger als zwei Sekunden durch Anpassung der Beleuchtungsstärke der Zielzonen-Beleuchtungsmittel einen Regelungsvorgang durchzuführen.

Dabei kann der zeitliche Abstand zwischen zwei aufeinanderfolgenden Regelungsvorgängen bei einer Vergrößerung der Beleuchtungsstärke kleiner sein als bei einer Verkleinerung der Beleuchtungsstärke. Dadurch kann für einen in der Zielzone befindlichen Benutzer die Änderung der Helligkeit von Beleuchtungsmitteln durch die Helligkeitsregelungsvorgänge weniger auffällig sein. So können beim Benutzer eventuelle durch die Helligkeitsregelung verursachte störende Empfindungen vermieden bzw. minimiert werden.

Die Erfindung wird im Folgenden beispielsweise anhand der Zeichnungen näher erläutert. Es zeigen:

Fig. 1    eine schematische Schnittansicht eines Innenraumes,

Fig. 2    eine schematische Ansicht eines durch ortsaufgelöste Helligkeitssensormittel erstellten Innenraumbildes,

Fig. 3    eine schematische Ansicht eines System zur Helligkeitsregelung gemäß einem Ausführungsbeispiel der Erfindung,

Fig. 4    eine schematisches Flussdiagramm eines Verfahren zur Helligkeitsregelung.

In den verschiedenen Figuren der Zeichnungen sind einander entsprechende Bauelemente mit gleichen Bezugszeichen versehen.

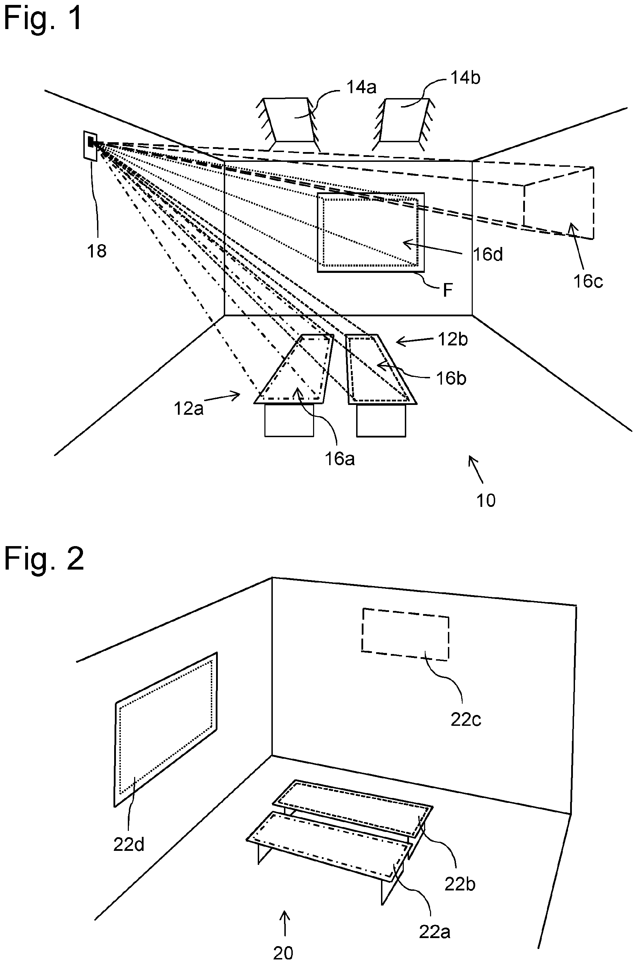

Fig. 1 zeigt eine schematische schematische Schnittansicht eines Innenraumes 10. Der Innenraum 10 kann ein Gebäudeinnenraum 10, beispielsweise ein Büro-Innenraum 10 sein und kann mehrere Arbeitsplätze 12a, 12b umfassen. Der Innenraum 10 kann mehrere Zielzonen-Beleuchtungsmittel 14a, 14b umfassen, welche dazu eingerichtet sind, die Arbeitsplätze 12a, 12b zu beleuchten. Im dargestellten Ausführungsbeispiel sind die Zielzonen-Beleuchtungsmittel 14a bzw. 14b den Arbeitsplätzen 12a bzw. 12b zugeordnet, so dass die Zielzonen-Beleuchtungsmittel 14a bzw. 14b eine zugeordnete Zielzone 16a bzw. 16b am zugeordneten Arbeitsplatz 12a bzw. 12b beleuchten. Hierbei ist es zweckmässig, wenn ein einem Arbeitsplatz 12a bzw. 12b zugeordnetes Zielzonen-Beleuchtungsmittel 14a bzw. 14b den entsprechenden Arbeitsplatz 12a bzw. 12b fokussiert beleuchtet, sodass eine hinreichende Trennung bei der Regelung der Zielzonen-Beleuchtungsmittel 14a bzw. 14b erzeugt wird. Es können aber auch mehrere Zielzonen-Beleuchtungsmittel einer Zielzone und/oder ein Zielzonen-Beleuchtungsmittel mehreren Zielzonen zugeordnet sein. Die Zielzonen 16a, 16b können beispielsweiswe jeweils eine Oberfläche eines Schreibtisches 12a, 12b und/oder eines PC-Arbeitsplatzes oder eine Arbeitsfläche eines Werkstattarbeitsplatzes umfassen. Der Innenraum 10 kann ferner zumindest eine Wand mit einer Wandzone 16c und zumindest ein Fenster F mit einer Fensterzone 16d umfassen, wobei durch das Fenster F Tageslicht in den Innenraum 10 einfällt.

Wie aus Fig. 1 ersichtlich, umfasst der Innenraum 10 ferner ortsaufgelöste Helligkeitssensormittel 18, die dazu eingerichtet sind, zumindest einen Teils des Innenraums auf ein Innenraumbild 20 optisch abzubilden. Im dargestellten Ausführungsbeispiel umfassen die Helligkeitssensormittel 18 eine Videokamera 18. Die Helligkeitssensormittel 18 können aber auch ein Photodiodenarray oder eine beliebige andere Art von ortsauflösenden Helligkeitssensormitteln umfassen. Fig. 2 zeigt eine schematische Ansicht eines durch ortsaufgelöste Helligkeitssensormittel 18 erstellten Innenraumbildes 20. Wie aus Fig. 1 ersichtlich, umfasst das Innenraumbild 20 mehrere Innenraumbildzonen 22a, 22b, 22c, 22d. Die Helligkeitssensormittel 18 können dazu eingerichtet sein, einen aktuellen Helligkeitswertevektor zu bestimmen, dessen Komponenten $\alpha_i(t)$ aktuellen integrierten Helligkeitswerten einer i-ten Innenraumbildzone entsprechen, wobei der Index i über zumindest eine Untermenge der Menge der Innenraumbildzonen 22a, 22b, 22c, 22d läuft.

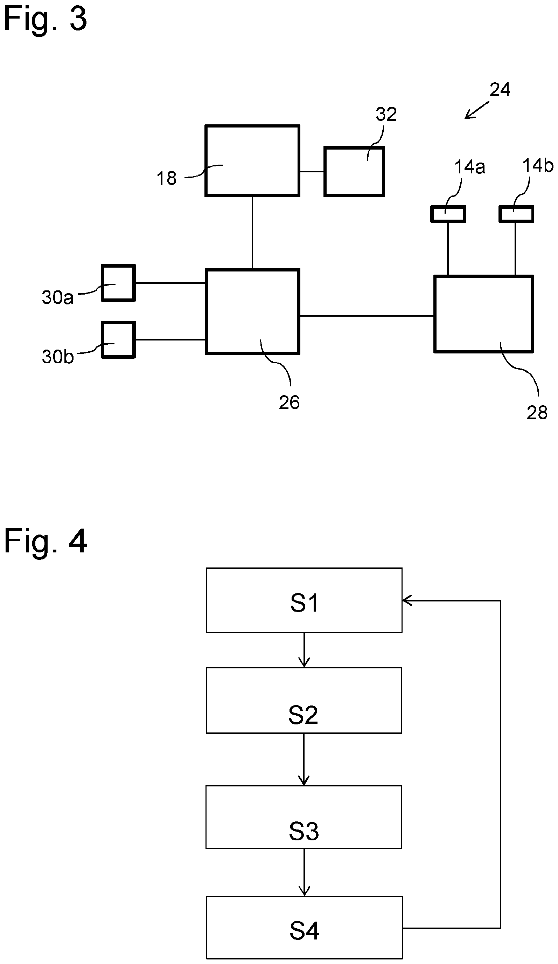

Fig. 3 zeigt eine schematische Ansicht eines Systems 24 zur Helligkeitsregelung gemäß einem Ausführungsbeispiel der Erfindung. Das System 24 umfasst neben ortsaufgelösten Helligkeitssensormitteln 18 eine Recheneinheit 26, die dazu eingerichtet ist, einen Zielzonenhelligkeitsregelwert aus dem Skalarprodukt des aktuellen Helligkeitswertevektors $\alpha_i(t)$ und eines Zielzonenkalibrierungsvektors zu bestimmen, wobei der Zielzonenkalibrierungsvektor einer Innenraumzielzone 16a, 16b zugeordnet ist. Das System 24 umfasst ferner eine Regeleinheit 28, die dazu eingerichtet ist, den Zielzonenhelligkeitsregelwert auf einen Zielzonenhelligkeitssollwert durch Anpassung der Beleuchtungsstärke der Zielzonen-Beleuchtungsmittel 14a, 14b zu regeln.

Weiterhin kann das System 24 zumindest einen Luxmeter 30a, 30b umfassen, der dazu eingerichtet ist, Helligkeitswerte in einer Innenraumzielzone 16a, 16b zu messen, um die Vorrichtung vor Aufnahme des Regelbetriebs zu kalibrieren. Die Komponenten $\lambda_i$ des Zielzonenkalibrierungsvektors können durch Lösen des linearen Gleichungssystems

$$\Sigma_i \, \alpha_{ji} \, \lambda_i \, = \, K_j \qquad\qquad (1)$$

bestimmt werden, wobei Index i der i-ten Innenraumbildzone, $\alpha_{ij}$ dem integrierten Helligkeitswert der i-ten Innenraumbildzone 22a, 22b, 22c, 22d zu unterschiedlichen Tageszeiten oder Beleuchtungssituationen j und $K_j$ den zur Tageszeit oder Beleuchtungssituation j durch den Luxmeter 30a, 30b gemessenen Helligkeitswerten in der Innenraumzielzone 16a, 16b entspricht. Dabei wird bei den Messungen zu unterschiedlichen Tageszeiten oder Beleuchtungssituationen j die Beleuchtungsstärke der Zielzonen-Beleuchtungsmittel 14a, 14b immer gleich gehalten.

Obwohl es bevorzugt ist, eine Kalibrierung für zumindest zwei Innenraumbildzonen 22a, 22d bei unterschiedlichen Tageszeiten oder Beleuchtungssituationen j vorzunehmen, ist es jedoch auch möglich und bevorzugt, eine Kalibrierung für nur eine Innenraumbildzone, beispielsweise für den gesamten Innenraum, durchzuführen. Hierfür kann die Kalibrierung einerseits bei Tageslicht und andererseits einmalig erfolgen. Mit heutigen Systemen muss ein Elektriker einmal tagsüber und schlimmstenfalls noch einmal nachts kalibrieren. Der Zielzonenkalibrierungsvektor $\lambda_i$ besitzt in diesem Fall nur eine Komponente $\lambda$, wobei $\lambda = K/\alpha$ ist. Durch diese vorteilhafte Skalierung kann eine handelsübliche Kamera als Luxmeter eingesetzt werden.

Bei einer Kalibrierung für zumindest zwei Innenraumbildzonen 22a, 22d ist es von Vorteil, wenn zumindest eine Innenraumbildzone 22d zumindest einen TeilBereich der Fensterzone oder des Fensterbereichs 16d abbildet, während die weiteren Innenraumbildzonen 22a, 22b, 22c Innenraumbereiche abbilden. Hierdurch wird die Kompensation eines Tagelichtanteils am besten kompensiert.

Der Luxmeter kann nur im sichtbaren Spektralbereich und die Helligkeitssensormittel sowohl im sichtbaren Spektralbereich als auch im nicht sichtbaren oder Infrarotbereich empfindlich sein. Dadurch können spektrale Verfälschungen der durch die Helligkeitssensormittel gemessenen Helligkeitswerte vermieden werden. Bei der Bestimmung des Zielzonenkalibrierungsvektors und der aktuellen Helligkeitswerte ist ein Luxmeter nur im (für das menschliche Auge) sichtbaren Bereich, ein Helligkeitssensormittel aber in der Regel auch im infraroten Spektrum empfindlich. Da Tageslicht einen signifikanten Infrarotanteil enthält, wird ein in diesem Spektrum empfindlicher Sensor immer andere Lichtwerte messen, als ein Luxmeter.

Bei der Bestimmung des Zielzonenkalibrierungsvektors kann also der durch das Luxmeter gemessene Helligkeitswert $K_j$ ein nur über den sichtbaren Spektralbereich oder über einen spektralen Unterbereich des sichtbaren Spektralbereichs integrierter Wert sein, wohingegen der durch die Helligkeitssensormittel bestimmte Helligkeitswert der i-ten Innenraumbildzone $\alpha_{ij}$ ein sowohl über den sichtbaren Spektralbereich oder über einen spektralen Unterbereich des sichtbaren Spektralbereichs als auch über einen nicht sichtbaren Spektralbereich oder über einen spektralen Unterbereich des nicht sichtbaren Spektralbereichs integrierter Wert ist.

Unter sichtbarem Spektralbereich soll ein spektraler Bereich elektromagnetischer Wellen verstanden werden, der in einem Wellenlängenbereich von 380 nm bis 780 nm liegt, da das menschliche Auge elektromagnetische Schwingungen als sichtbare Lichtstrahlung im Spektralbereich von 380 bis 780 nm erfasst. Am hellsten empfindet ein Mensch Wellenlängen um 555 nm, das Licht der Farbe grün. Auf die Farben violett und blau im Bereich von 380 bis 480 nm oder die Farben gelb, orange und rot im Bereich von 560 bis 780 nm reagiert ein Mensch deutlich weniger empfindlich. Das Abbild dieser Empfindlichkeitskurve wird $V(\lambda)$-Funktion genannt. Unter einem spektralen Unterbereich des sichtbaren Spektralbereichs kann ein oder mehrere kontinuierliche Abschnitte im sichtbaren Spektralbereich, ein oder mehrere monochromatische Punkte im sichtbaren Spektralbereich oder auch ein unendlicher Spektralbereich verstanden werden, der durch eine menschliche Empfindlichkeitskurve für Helligkeit oder die $V(\lambda)$-Funktion gefiltert ist und ein endliches Integral aufweist (ähnlich einer Gaußkurve). Entscheidend bei der Bestimmung des Helligkeitswertes $K_j$ durch Integration über den sichtbaren Spektralbereich ist, dass spektrale Anteile des elektromagnetischen Spektrums, die nicht zu einem Helligkeitsempfinden eines Menschen beitragen, nicht oder in vernachlässigbaren Maße in den integrierten Wert $K_j$ eingehen. Es kann also mit anderen Worten ein handelsübliches Luxmeter verwendet werden.

Unter nicht sichtbarem Spektralbereich soll grundsätzlich ein spektraler Bereich elektromagnetischer Wellen verstanden werden, der außerhalb eines Wellenlängenbereichs von 380 nm bis 780 nm liegt. Unter einem spektralen Unterbereich des nicht sichtbaren Spektralbereichs kann ein oder mehrere kontinuierliche Abschnitte im nicht sichtbaren Spektralbereich, ein oder mehrere monochromatische Punkte im nicht sichtbaren Spektralbereich oder auch ein unendlicher Spektralbereich verstanden werden, der durch eine Empfindlichkeitskurve einer Kamera oder eines üblichen Halbleiter-Photosensors gefiltert ist und ein endliches Integral aufweist (ähnlich einer Gaußkurve). Entscheidend bei der Bestimmung des Helligkeitswertes $\alpha_{ij}$ durch Integration über den sichtbaren und nicht sichtbaren Spektralbereich ist, dass spektrale Anteile des elektromagnetischen Spektrums, die nicht zu einem Helligkeitsempfinden eines Menschen beitragen, in nicht vernachlässigbarem Maße in den integrierten Wert $\alpha_{ij}$ eingehen. Es kann also mit anderen Worten eine handelsübliche Kamera oder ein CMOS-Sensor ohne weitere Filter verwendet werden, da durch den erfindungsgemäßen Zielzonenkalibrierungsvektor ein zu hoher Anteil an nicht sichtbarem Licht, beispielsweise Infrarot oder UV, kompensiert wird.

Mittels der erfindungsgemäßen Helligkeitsregelung unter Zuhilfenahme eines Zielzonenkalibrierungsvektors kann also verhindert werden, dass bei einem sehr starken Tageslichtanteil mit hohem Infrarotanteil oder sehr hohem UV-Anteil (im Gegensatz zu einer künstlichen Beleuchtungsquelle mit niedrigem Infrarotanteil) die Zielzonenhelligkeit im sichtbaren Spektralbereich heruntergeregelt wird, da der Infrarotanteil oder UV-Anteil fälschlicherweise für die Bestimmung der Helligkeit im sichtbaren Spektralbereich mit einbezogen wird.

Im dargestellten Ausführungsbeispiel sind die Luxmeter 30a bzw. 30b der jeweiligen Innenraumzielzone 16a bzw. 16b zugeordnet und werden beim Kalibrierungsvorgang beispielsweise auf der Arbeitsfläche des jeweiligen Arbeitsplatzes 12a bzw. 12b platziert. Wie aus Fig. 2 ersichtlich, umfasst die Innenraumbildzone 22d zumindest einen Bereich der Fensterzone 16d. Um den Zielzonenkalibrierungsvektor $\lambda_i{}^a$ für die dem Arbeitsplatz 12a zugeordnete Zielzone 16a gem. Gl. (1) zu bestimmen, wird für die Messung der Komponenten des Helligkeitswertevektors neben der Innenraumbildzone 22d eine weitere Innenraumbildzone ausgewählt, beispielsweise die Innenraumbildzone 22a, die den Arbeitsplatz 12a direkt abbildet. Es kann aber auch eine andere Innenraumbildzone, beispielsweise die Innenraumbildzone 22c gewählt werden, die Raumbereichen des Innenraums 10 entspricht, deren Reflexionseigenschaften im Wesentlichen unverändert bleiben. Dies können im Wesentlichen unveränderliche Bereiche sein, insbesondere Wand- und /oder Deckenbereiche des Innenraums 10. Im dargestellten Ausführungsbeispiel entspricht die Innenraumbildzone 22c der Wandzone 16c. Dadurch werden, insbesondere reflexionsbedingte, Störungen oder Schwankungen in den Werten des Helligkeitswertevektors vermieden. Folglich kann eine genaue Bestimmung des Zielzonenhelligkeitsregelwertes erfolgen.

Somit erhält man also einen zweikomponentigen Helligkeitswertevektor $(\alpha_1, \alpha_2)$, wobei die erste Komponente der das Fenster F abbildenden Innenraumbildzone 22d entspricht. Um ein Gleichungssystem gem. (1) aufzustellen, werden zwei unterschiedliche Tageszeiten oder Beleuchtungssituationen j (j=1, 2), gewählt, zu denen die Werte $K_j$ durch den Luxmeter 30a gemessenen werden. Dabei wird bei den Messungen zu unterschiedlichen Tageszeiten oder Beleuchtungssituationen j die Beleuchtungsstärke der Zielzonen-Beleuchtungsmittel 14a, 14b immer gleich gehalten. Beispielsweise können die Zielzonen-Beleuchtungsmittel 14a, 14b dabei immer abgeschaltet bleiben. Die beiden Tageszeiten oder Beleuchtungssituationen werden vorzugsweise so gewählt, dass sie zwei stark unterschiedlichen Tageslichtstärken entsprechen, beispielsweise am frühen Morgen bei geringer Sonnenhelligkeit und mittags bei vollem Sonnenschein. Somit erhält man die Werte $K_1$ und $K_2$, die in das Gleichungssystem

$$\alpha_{11}\ \lambda_1{}^a + \alpha_{12}\ \lambda_2{}^a = K_1, \qquad (2)$$

$$\alpha_{21}\ \lambda_1{}^a + \alpha_{22}\ \lambda_2{}^a = K_2, \qquad (3)$$

eingehen, wobei $(\alpha_{11}, \alpha_{12})$ bzw. $(\alpha_{21}, \alpha_{22})$ die Helligkeitswertevektoren zu Tageszeit oder Beleuchtungssituationen 1 bzw. 2 sind. Durch Lösen des Gleichungssystems (2), (3) erhält man den Zielzonenkalibrierungsvektor $(\lambda_1{}^a, \lambda_2{}^a)$ für die Zielzone 16a. Das oben beschriebene Verfahren kann beispielsweise für die Zielzone 16b analog durchgeführt werden, um den entsprechenden Zielzonenkalibrierungsvektor $(\lambda_1{}^b, \lambda_2{}^b)$ zu bestimmen.

In Tabelle 1 sind beispielhaft experimentelle Werte für die Größen $\alpha_{ij}$ und $K_j$ angegeben.

**Tabelle 1**

| Messung | $\alpha_{j1}$ [Lux] | $\alpha_{j2}$ [Lux] | $K_j$ [Lux] |
|---|---|---|---|
| Wenig Tageslicht (j=1) | 160 | 143 | 581 |
| Viel Tageslicht (j=2) | 217 | 415 | 687 |

Durch das Lösen des Gleichungssystems (2), (3) mit den $\alpha_{ij}$ und $K_j$-Werten aus der Tabelle 1 erhält man für den Zielzonenkalibrierungsvektor: $(\lambda_1, \lambda_2)$ = (-0,46, 4,04). Der aktuelle Zielzonenhelligkeitsregelwert h(t) wird aus dem Skalarprodukt des aktuellen Helligkeitswertevektors $(\alpha_1(t), \alpha_2(t))$ und des Zielzonenkalibrierungsvektors $(\lambda_1, \lambda_2)$ wir folgt bestimmt:

$$h(t) = -\alpha_1(t)*0,46 + \alpha_2(t)*4,04 \qquad (4).$$

Wie man sieht, ist die erste, dem Fenster F entsprechende Komponente $\lambda_1$ des Zielzonenkalibrierungsvektors negativ. Das trägt der Tatsache Rechnung, dass bei dem erfindungsgemäßen Verfahren bei der Bestimmung des Zielzonenhelligkeitsregelwertes gem. Gl. (4) der Einfluss des Tageslichtes auf den durch Helligkeitssensormittel 18 ermittelten aktuellen Hellgkeitswert $\alpha_2(t)$ eliminiert wird. Somit kann unter der Berücksichtigung der aktuellen Tageslichtstärke ein Zielzonenhelligkeitsregelwert ermittelt werden, welcher an den Wert der in der Zielzone tatsächlich vorherrschenden Helligkeit sehr nahe kommt. Dadurch kann die Regelung sehr genau erfolgen und als Folge kann Energie erheblich eingespart werden.

Im oben dargestellten Beispiel beträgt die Gesamtzahl der Innenraumbildzonen 2, d.h. es mussten Messungen zu zwei verschiedenen Tageszeiten oder Beleuchtungssituationen durchgeführt werden, um ein eindeutig lösbares lineares Gleichungssystem (2), (3) für den 2-dimensionalen Zielzonenkalibrierungsvektor $(\lambda_1, \lambda_2)$ zu erhalten. Im allgemeinen Fall von N Innenraumbildzonen müssen Messungen zu N verschiedenen Tageszeiten oder Beleuchtungssituationen j (j=1, ..., N) durchgeführt werden, um ein eindeutig lösbares lineares Gleichungssystem (1) mit N Gleichungen für den N-dimensionalen Zielzonenkalibrierungsvektor $\lambda_i$ (i=1, ..., N) zu erhalten.

Für eine präzise Kalibrierung ist es von Vorteil, wenn die Kunstbeleuchtung während der beiden oben beschriebenen Kalibrier-Messungen auf gleicher Beleuchtungsstärke gehalten wird, da durch die Kalibrierung der Einfluss des natürlichen Lichts bestimmt werden soll, und nicht der Einfluss des Kunstlichtes. Bei dem oben beschriebenen Ausführungsbeispiel sollten ferner zwei Messungen durchgeführt werden, um das Gleichungssystem mit zwei Unbekannten lösen zu können. Je weiter die Messpunkte von der Helligkeit her auseinander liegen, desto besser. Jedoch kann selbst ein Zeitabstand von einer Stunde ( z.B. erste Messung um 9:00 Uhr und zweite Messung um 10:00 Uhr ) einen erheblichen Zuwachs an Tageslicht liefern und somit eine präzise Kalibrierung ermöglichen. Bei einer Kalibrierung lediglich einer Zielzone ist es zweckmässig, wenn eine zweite Zielzone verwendet wird, die einen Fensterbereich enthält, um eine präzise Tageslicht-Kalibrierung zu erreichen.

Das System 24 kann ferner Anwesenheitserfassungsmittel 32 umfassen, die dazu eingerichtet sind, eine Anwesenheit von Personen in den Innenraumbildzonen 22a, 22b, 22c, 22d zu erfassen. Dabei können die Innenraumbildzonen, in denen eine Anwesenheit von Personen erkannt wurde, nicht zur Bestimmung der Komponenten des aktuellen Helligkeitswertevektors benutzt werden. Dadurch kann eine durch eine Anwesenheit von Personen verursachte Verfälschung der Werte des Helligkeitswertevektors vermieden werden. Ferner können die Anwesenheitserfassungsmittel 32 dazu eingerichtet sein, eine Abwesenheit von Personen im Innenraum 10 zu erkennen. In diesem Fall kann die Regeleinheit 28 die Beleuchtung im Innenraum 10 komplett ausschalten. Dadurch kann Energie eingespart werden.

Die Regeleinheit 28 kann IP-Schnittstelle und/oder eine weitere Systembusschnittstelle umfassen. Beispielsweise kann die Regeleinheit 28 BACnet und/oder DALI-kompatibel sein. Dadurch wird eine mit den üblichen Netzwerkprotokollen für die Gebäudeautomation kompatible Ansteuerung von Zielzonen-Beleuchtungsmitteln 14a, 14b ermöglicht.

Die Regeleinheit 28 kann dazu eingerichtet sein, in zeitlichen Abständen von weniger als einer Sekunde oder weniger als zwei Sekunden durch Anpassung der Beleuchtungsstärke der Zielzonen-Beleuchtungsmittel 14a, 14b einen Regelungsvorgang durchzuführen. Dadurch wird eine schnelle Regelung der Beleuchtungsstärke ermöglicht. Dabei kann der zeitliche Abstand zwischen zwei aufeinanderfolgenden Regelungsvorgängen bei einer Vergrößerung der Beleuchtungsstärke kleiner sein als bei einer Verkleinerung der Beleuchtungsstärke. Da physiologisch bedingt die Adaptation des Auges bei einer Steigerung der Helligkeit schneller als bei einer Verminderung der Helligkeit erfolgt, kann dadurch für einen in der Zielzone befindlichen Benutzer die Änderung der Helligkeit von Beleuchtungsmitteln durch die Helligkeitsregelungsvorgänge weniger auffällig sein. So können beim Benutzer eventuelle durch die Helligkeitsregelung verursachte störende Empfindungen vermieden bzw. minimiert werden.

Fig. 4 zeigt ein schematisches Flussdiagramm eines Verfahrens zur Helligkeitsregelung. Das Verfahren umfasst folgende Schritte: optisches Abbilden S1 zumindest eines Teils des Innenraums auf ein Innenraumbild durch ortsaufgelöste Helligkeitssensormittel; Bestimmen S2 eines aktuellen Helligkeitswertevektors, deren Komponenten $\alpha_i(t)$ aktuellen integrierten Helligkeitswerten einer i-ten Innenraumbildzone entsprechen; Bestimmen S3 eines Zielzonenhelligkeitsregelwertes aus dem Skalarprodukt des aktuellen Helligkeitswertevektors und eines Zielzonenkalibrierungsvektors, der einer Innenraumzielzone zugeordnet ist; und Regeln S4 des Zielzonenhelligkeitsregelwertes auf einen Zielzonenhelligkeitssollwert durch Anpassung der Beleuchtungsstärke der Zielzonen-Beleuchtungsmittel. Nach dem Schritt S4 beginnt das Verfahren wieder bei Schritt S1.

Wie oben dargelegt, kann durch das Vorsehen des erfindungsgemäßen Verfahrens der Regelwert für die Helligkeitsregelung von Zielzonen-Beleuchtungsmitteln sehr genau bestimmt werden. Ferner ist es dadurch möglich, mehrere Beleuchtungsmittel unabhängig voneinander zu regeln, wobei hierfür nur ein Sensor benötigt wird. So kann bei einem einfachen Aufbau des Systems die Regelung individuell erfolgen und dadurch Energie erheblich eingespart werden.

**Patentansprüche**

1. Verfahren zur Helligkeitsregelung von Zielzonen-Beleuchtungsmitteln (14a, 14b), die eine Innenraumzielzone (16a, 16b) eines Innenraums (10) beleuchten, mit den Schritten:

   optisches Abbilden (S1) zumindest eines Teils des Innenraums (10) auf ein Innenraumbild (20) durch ortsaufgelöste Helligkeitssensormittel (18), wobei das Innenraumbild (20) zumindest zwei Innenraumbildzonen (22a, 22b, 22c, 22d) umfasst,
   Bestimmen (S2) eines aktuellen N-dimensionalen Helligkeitswertevektors, dessen jeweils i-te Komponente $\alpha_i(t)$ aktuellen integrierten Helligkeitswerten der i-ten Innenraumbildzone (22a, 22b, 22c, 22d) entspricht, wobei t die aktuelle Zeit ist, **dadurch gekennzeichnet, dass** die Dimension N größer oder gleich 2 ist und der Index i über zumindest eine Untermenge der Menge der Innenraumbildzonen (22a, 22b, 22c, 22d) läuft,
   Bestimmen (S3) eines Zielzonenhelligkeitsregelwertes aus dem Skalarprodukt des aktuellen Helligkeitswertevektors und eines N-dimensionalen Zielzonenkalibrierungsvektors, der der Innenraumzielzone (16a, 16b) zugeordnet ist,
   Regeln (S4) des Zielzonenhelligkeitsregelwertes auf einen Zielzonenhelligkeitssollwert durch Anpassung der jeweiligen Beleuchtungsstärke der Zielzonen-Beleuchtungsmittel (14a, 14b).

2. Verfahren nach Anspruch 1, wobei die Helligkeitssensormittel (18) ein Photodiodenarray oder eine Kamera (18) umfassen.

3. Verfahren nach einem der Ansprüche 1 oder 2, wobei der Innenraum (10) einen Gebäudeinnenraum (10) umfasst und die Innenraumbildzonen (22a, 22b, 22c, 22d) unterschiedlichen Raumbereichen (16c) des Gebäudeinnenraumes (10) entsprechen, deren Reflexionseigenschaften im Wesentlichen unverändert bleiben.

4. Verfahren nach einem der vorhergehenden Ansprüche, wobei, wenn die Dimension N des Helligkeitswertevektors und des Zielzonenkalibrierungsvektors gleich der Anzahl an Innenraumbildzonen ist, die Komponenten des Zielzonenkalibrierungsvektors durch Lösen des linearen Gleichungssystems

$$\Sigma_i \, \alpha_{ji} \, \lambda_i \, = \, K_j$$

   bestimmt werden, wobei Index i der i-ten Innenraumbildzone (22a, 22b, 22c, 22d), $\lambda_i$ der i-ten Komponente des Zielzonenkalibrierungsvektors, $\alpha_{ij}$ dem integrierten Helligkeitswert der i-ten Innenraumbildzone (22a, 22b, 22c, 22d) zu unterschiedlichen Tageszeiten oder Beleuchtungssituationen j und $K_j$ den zur Tageszeit oder Beleuchtungssituation j durch einen Luxmeter (30a, 30b) gemessenen Helligkeitswerten in der Innenraumzielzone (16a, 16b) entspricht, und wobei die Indizes i und j jeweils den Wertebereich von 1 bis N durchlaufen.

5. Verfahren nach Anspruch 4, wobei bei der Bestimmung des Zielzonenkalibrierungsvektors der durch das Luxmeter (30a, 30b) gemessene Helligkeitswert $K_j$ ein über den sichtbaren Spektralbereich integrierter Wert ist, wobei der durch die Helligkeitssensormittel (18) bestimmte Helligkeitswert der i-ten Innenraumbildzone $\alpha_{ij}$ ein sowohl über den sichtbaren Spektralbereich als auch über einen nicht sichtbaren Spektralbereich integrierter Wert ist.

6. Verfahren nach einem der vorhergehenden Ansprüche, wobei eine Innenraumbildzone (22d) einem Fensterbereich (16d) entspricht.

7. Verfahren nach Anspruch 6, wobei, falls eine Komponente des Zielzonenkalibrierungsvektors der dem Fensterbereich (16d) entsprechenden Innenraumbildzone (22d) entspricht, diese Komponente des Zielzonenkalibrierungsvektors negativ ist.

8. Verfahren nach einem der vorhergehenden Ansprüche, wobei das Verfahren ferner einen Anwesenheitserfassungsschritt umfasst, bei dem eine Anwesenheit von Personen in den Innenraumbildzonen (22a, 22b, 22c, 22d), erfasst wird, wobei Innenraumbildzonen, in denen die Anwesenheit von Personen erkannt wurde, nicht zur Bestimmung der Komponenten des aktuellen Helligkeitswertevektors benutzt werden.

9. Verfahren nach einem der vorhergehenden Ansprüche, wobei die zur Bestimmung der Komponenten des Helligkeitswertevektors benutzten Innenraumbildzonen (22c) im Wesentlichen unveränderlichen Bereichen, insbesondere Wand- und /oder Deckenbereichen (16c) des Innenraums (10) entsprechen.

**10.** System (24) zur Helligkeitsregelung von Zielzonen-Beleuchtungsmitteln (14a, 14b), die eine Innenraumzielzone (16a, 16b) eines Innenraums (10) beleuchten, mit

ortsaufgelösten Helligkeitssensormitteln (18), die dazu eingerichtet sind, zumindest einen Teil des Innenraums (10) auf ein Innenraumbild (20) optisch abzubilden, wobei das Innenraumbild (20) zumindest zwei Innenraumbildzonen (22a, 22b, 22c, 22d) umfasst, und einen aktuellen N-dimensionalen Helligkeitswertevektor zu bestimmen, dessen jeweils i-te Komponente $\alpha_i(t)$ aktuellen integrierten Helligkeitswerten der i-ten Innenraumbildzone (22a, 22b, 22c, 22d) entspricht, wobei t die aktuelle Zeit ist, **dadurch gekennzeichnet, dass** die Dimension N größer oder gleich 2 ist und der Index i über zumindest eine Untermenge der Menge der Innenraumbildzonen (22a, 22b, 22c, 22d) läuft,
einer Recheneinheit (26), die dazu eingerichtet ist, einen Zielzonenhelligkeitsregelwert aus dem Skalarprodukt des aktuellen Helligkeitswertevektors und eines N-dimensionalen Zielzonenkalibrierungsvektors, der der Innenraumzielzone (16a, 16b) zugeordnet ist, zu bestimmen, und
einer Regeleinheit (28), die dazu eingerichtet ist, den Zielzonenhelligkeitsregelwert auf einen Zielzonenhelligkeitssollwert durch Anpassung der jeweiligen Beleuchtungsstärke der Zielzonen-Beleuchtungsmittel (14a, 14b) zu regeln.

**11.** System (24) nach Anspruch 10, ferner mit Anwesenheitserfassungsmitteln (32), die dazu eingerichtet sind, eine Anwesenheit von Personen in den Innenraumbildzonen (22a, 22b, 22c, 22d) zu erfassen.

**12.** System (24) nach einem der Ansprüche 10 oder 11, wobei die Regeleinheit (28) eine IP-Schnittstelle und/oder eine Systembusschnittstelle umfasst.

**13.** System (24) nach einem der Ansprüche 10 bis 12, ferner mit einem Luxmeter (30a, 30b), der dazu eingerichtet ist, Helligkeitswerte in einer Innenraumzielzone (16a, 16b) zu messen, um das System vor Aufnahme des Regelbetriebs zu kalibrieren.

**14.** System (24) nach einem der Ansprüche 10 bis 13, wobei die Regeleinheit (28) dazu eingerichtet ist, in zeitlichen Abständen von weniger als zwei Sekunden durch Anpassung der Beleuchtungsstärke der Zielzonen-Beleuchtungsmittel (14a, 14b) einen Regelungsvorgang durchzuführen.

**15.** System (24) nach Anspruch 14, wobei der zeitliche Abstand zwischen zwei aufeinanderfolgenden Regelungsvorgängen bei einer Vergrößerung der Beleuchtungsstärke kleiner ist als bei einer Verkleinerung der Beleuchtungsstärke.

**Claims**

**1.** Method for regulating the brightness of target-zone lighting media (14a, 14b) which illuminate an interior target zone (16a, 16b) of an interior space (10), with the steps:

Optical imaging (S1) of at least one part of the interior space (10) onto an interior space image (20) by locally-triggered brightness sensor means (18), wherein the interior image (20) comprises at least two interior area image zones (22a, 22b, 22c, 22d),
determination (S2) of a current N-dimensional brightness value vector, of which in each case the i-th component $\alpha_1(t)$ of the current integrated brightness values corresponds to the i-th interior area image zone (22a, 22b, 22c, 22d), wherein t is the current time,
**characterized in that** the dimension N is greater than or equal to 2, and the index i runs over at least a sub-quantity of the quantity of interior area image zones (22a, 22b, 22c, 22d),
determination (S3) of a target-zone brightness regulating value from the scalar product of the current brightness value vector and of an N-dimensional target-zone calibration vector, which is allocated to the interior area target zone (16a, 16b),
regulating (S4) of the target-zone brightness regulation value to a target-zone brightness reference or target value, by adjusting the respective lighting strength of the target-zone lighting means (14a, 14b).

**2.** Method according to claim 1, wherein the brightness sensor means (18) comprise a photo diode array or a camera (18).

3. Method according to any one of claims 1 or 2, wherein the interior area (10) comprises a building interior space (10), and the interior image zones (22a, 22b, 22c, 22d) correspond to the different space regions (16c) of the building interior space (10), of which the reflection properties essentially remain unchanged.

4. Method according to any one of the preceding claims, wherein, if the dimension N of the brightness value vector and of the target-zone calibration vector is equal to the number of interior area image zones, the components of the target-zone calibration vector is determined by solving the linear equation system

$$\Sigma_i \, \alpha_{ji} \, \lambda_i \, = \, K_j$$

wherein index i corresponds to the i-th interior area image zone (22a, 22b, 22c, 22d), $\lambda_i$ corresponds to the i-th component of the target-zone calibration vector, $\alpha_{ji}$ corresponds to the integrated brightness value of the i-th interior area image zone (22a, 22b, 22c, 22d) at different times of the day or different lighting situations j, and $K_j$ corresponds to the brightness values in the interior target-zone (16a, 16b), measured by a luxmeter (30a, 30b), and wherein the indices i and j in each case run through the value range from 1 to N.

5. Method according to claim 4, wherein, at the determination of the target-zone calibration vector, the brightness value $K_j$, measured by the luxmeter (30a, 30b), is a value integrated over the visible spectral range, wherein the brightness value, determined by the brightness sensor means (18), of the i-th interior area image zone $\alpha_{ji}$ is a value integrated both over the visible spectral range as well as over a non-visible spectral range.

6. Method according to any one of the preceding claims, wherein an interior area image zone (22d) corresponds to a window region (16d).

7. Method according to claim 6, wherein, in the event of a component of the target-zone calibration vector of the interior area image zone (22d) corresponding to the window region (16d), this component of the target-zone calibration vector is negative.

8. Method according to any one of the preceding claims, wherein the method further comprises a presence-detection step, in which a presence of persons in the interior area image zones (22a, 22b, 22c, 22d) is detected, wherein interior area image zones in which the presence of persons was identified are not used for the determination of the components of the current brightness value vector.

9. Method according to any one of the preceding claims, wherein the interior area image zones (22c) which are used for the determination of the components of the brightness value vector correspond essentially to unchanged regions, in particular wall and/or ceiling regions (16c) of the interior area (10).

10. System (24) for the brightness regulating of target-zone lighting means (14a, 14b), which illuminate an interior area target-zone (16a, 16b) of an interior area (10), with locally triggered brightness sensor means (18), which are configured such as to image optically at least a part of the interior area (10) onto an interior area image (20), wherein the interior area image (20) comprises at least two interior image zones (22a, 22b, 22c, 22d), and to determine a current N-dimensional brightness value vector, of which in each case an i-th component $\alpha_1(t)$ corresponds to current integrated brightness values of the i-th interior image zone (22a, 22b, 22c, 22d), wherein t is the current time, **characterized in that** the dimension N is greater than or equal to 2, and the index 1 runs over at least one sub-quantity of the quantity of interior area image zones (22a, 22b, 22c, 22d),

   a computer unit (26), which is configured such as to determine a target-zone brightness regulating value from the scalar product of the current brightness value vector and from an N-dimensional target-zone calibration vector, which is assigned to the interior area target zone (16a, 16b), and
   a regulating unit (28), which is configured such as to regulate the target-zone brightness regulating value to a target-zone brightness reference or target value by adjusting the respective lighting strength of the target-zone lighting means (14a, 14b).

11. System (24) according to claim 10, additionally with presence detection means (32), which are configured such as to detect a presence of persons in the interior area image zones (22a, 22b, 22c, 22d).

12. System (24) according to any one of claims 10 or 11, wherein the regulating unit (28) comprises an IP interface and/or a system bus interface.

13. System (24) according to any one of claims 10 to 12, additionally with a luxmeter (30a, 30b), which is configured such as to measure brightness values in an interior area target zone (16a, 16b), in order to calibrate the system before undertaking the regulating operation.

14. System (24) according to any one of claims 10 to 13, wherein the regulating unit (28) is configured such as to carry out a regulating procedure at time intervals of less than two seconds by the adjustment of the lighting strength of the target-zone lighting means (14a, 14b).

15. System (24) according to claim 14, wherein, in the event of an increase in the lighting strength, the time interval between two sequential regulating procedures is less than in the event of a reduction in the lighting strength.

**Revendications**

1. Procédé de régulation de luminosité de moyens d'éclairage de zones cibles (14a, 14b), qui éclairent une zone cible d'espace intérieur (16a, 16b) d'un espace intérieur (10), comprenant les étapes suivantes :

   représenter optiquement (S1) au moins une partie de l'espace intérieur (10) sur une image d'espace intérieur (20) par des moyens capteurs de luminosité (18) à résolution spatiale, dans lequel l'image d'espace intérieur (20) comprend au moins deux zones d'image d'espace intérieur (22a, 22b, 22c, 22d),
   déterminer (S2) un vecteur de valeurs de luminosité courant à N dimensions, dont la i-ième composante $\alpha_i^{(t)}$ correspond respectivement à des valeurs de luminosité intégrées courantes de la i-ième zone d'image d'espace intérieur (22a, 22b, 22c, 22d), dans lequel t est le moment courant, **caractérisé en ce que** la dimension N est supérieure ou égale à 2 et l'indice i s'étend sur au moins une sous-quantité de la quantité des zones d'image d'espace intérieur (22a, 22b, 22c, 22d),
   déterminer (S3) une valeur de régulation de luminosité de zones cibles à partir du produit scalaire du vecteur de valeurs de luminosité courant et d'un vecteur d'étalonnage de zones cibles à N dimensions qui est associé à la zone cible d'espace intérieur (16a, 16b),
   réguler (S4) la valeur de régulation de luminosité de zones cibles sur une valeur de consigne de luminosité de zones cibles par adaptation de l'intensité d'éclairage respective des moyens d'éclairage de zones cibles (14a, 14b).

2. Procédé selon la revendication 1, dans lequel les moyens capteurs de luminosité (18) comprennent un réseau de photodiodes ou un appareil de prise de vues (18).

3. Procédé selon l'une des revendications 1 ou 2, dans lequel l'espace intérieur (10) comprend un espace intérieur de bâtiment (10) et les zones d'image d'espace intérieur (22a, 22b, 22c, 22d) correspondent à différentes zones spatiales (16c) de l'espace intérieur de bâtiment (10) dont les propriétés de réflexion restent sensiblement inchangées.

4. Procédé selon l'une des revendications précédentes, dans lequel, lorsque la dimension N du vecteur de valeurs de luminosité et du vecteur d'étalonnage de zones cibles est identique au nombre de zones d'image d'espace intérieur, les composantes du vecteur d'étalonnage de zones cibles sont déterminées en résolvant le système d'équation linéaire,

$$\Sigma_i\ \alpha_{ji}\ \lambda_i\ =\ K_j$$

   dans lequel l'indice i de la i-ième zone d'image d'espace intérieur (22a, 22b, 22c, 22d) $\lambda_i$, de la i-ième composante du vecteur d'étalonnage de zones cibles $\alpha_{ij}$ correspond à la valeur de luminosité intégrée de la i-ième zone d'image d'espace intérieur (22a, 22b, 22c, 22d) à des moments de la journée ou des situations d'éclairage J différents et $K_j$ correspond à des valeurs de luminosité dans la zone cible d'espace intérieur (16a, 16b) mesurées par un luxmètre (30a, 30b) au moment de la journée ou lors de la situation d'éclairage j, et dans lequel les indices i et j se situent respectivement dans la plage de valeurs de 1 à N.

5. Procédé selon la revendication 4, dans lequel, lors de la détermination du vecteur d'étalonnage de zones cibles, la

valeur de luminosité $K_j$ mesurée par le luxmètre (30a, 30b) est une valeur intégrée sur la plage spectrale visible, dans lequel la valeur de luminosité déterminée par les moyens capteurs de luminosité (18) de la i-ième zone d'image d'espace intérieur $\alpha_{ij}$ est une valeur intégrée à la fois sur la plage spectrale visible et sur une plage spectrale non visible.

6. Procédé selon l'une des revendications précédentes, dans lequel une zone d'image d'espace intérieur (22d) correspond à une zone de fenêtre (16).

7. Procédé selon la revendication 6, dans lequel, si une composante du vecteur d'étalonnage de zones cibles correspond à la zone d'image d'espace intérieur (22d) correspondant à la zone de fenêtre (16d), ladite composante du vecteur d'étalonnage de zones cibles est négative.

8. Procédé selon l'une des revendications précédentes, dans lequel le procédé comprend en outre une étape de détection de présence, dans laquelle une présence de personnes dans les zones d'image d'espace intérieur (22a, 22b, 22c, 22d) est détectée, dans lequel des zones d'image d'espace intérieur dans lesquelles la présence de personnes a été constatée ne sont pas utilisées pour déterminer les composantes du vecteur de valeurs de luminosité courant.

9. Procédé selon l'une des revendications précédentes, dans lequel les zones d'image d'espace intérieur (22c) utilisées pour déterminer les composantes du vecteur de valeurs de luminosité correspondent sensiblement aux zones inchangées, en particulier aux zones de mur et/ou de plafond (16c) de l'espace intérieur (10).

10. Système (24) de régulation de luminosité de moyens d'éclairage de zones cibles (14a, 14b), qui éclairent une zone cible d'espace intérieur (16a, 16b) d'un espace intérieur (10), comprenant

   des moyens capteurs de luminosité (18) à résolution spatiale qui sont configurés pour représenter optiquement une partie au moins de l'espace intérieur (10) sur une image d'espace intérieur (20), dans lequel l'image d'espace intérieur (20) comprend au moins deux zones d'image d'espace intérieur (22a, 22b, 22c, 22d), et pour déterminer un vecteur de valeurs de luminosité courant à N dimensions, dont une i-ième composante $\alpha_i^{(t)}$ correspond à des valeurs de luminosité intégrées courantes de la i-ième zone d'image d'espace intérieur (22a, 22b, 22c, 22d), dans lequel t est le moment courant, **caractérisé en ce que** la dimension N est supérieure ou égale à 2 et l'indice i s'étend sur au moins une sous-quantité de la quantité de zones d'image d'espace intérieur (22a, 22b, 22c, 22d),
   une unité de calcul (26) qui est configurée pour déterminer une valeur de régulation de luminosité de zones cibles à partir du produit scalaire du vecteur de valeurs de luminosité courant et d'un vecteur d'étalonnage de zones cibles à N dimensions qui est associé à la zone cible d'espace intérieur (16a, 16b), et
   une unité de régulation (28) qui est configurée pour réguler la valeur de régulation de luminosité de zones cibles sur une valeur de consigne de luminosité de zones cibles par adaptation de l'intensité d'éclairage respective des moyens d'éclairage de zones cibles (14a, 14b) .

11. Système (24) selon la revendication 10, comprenant en outre des moyens de détection de présence (32) qui sont configurer pour détecter une présence de personnes dans les zones d'image d'espace intérieur (22a, 22b, 22c, 22d) .

12. Système (24) selon l'une des revendications 10 ou 11, dans lequel l'unité de régulation (28) comprend une interface IP et/ou une interface de bus de système.

13. Système (24) selon l'une des revendications 10 à 12, comprenant en outre un luxmètre (30a, 30b) qui est configuré pour mesurer des valeurs de luminosité dans une zone cible d'espace intérieur (16a, 16b) pour étalonner le système avant l'adoption du mode de régulation.

14. Système (24) selon l'une des revendications 10 à 13, dans lequel l'unité de régulation (28) est configurée pour effectuer une opération de régulation à des intervalles de temps inférieurs à 2 secondes par adaptation de l'intensité d'éclairage des moyens d'éclairage de zones cibles (14a, 14b).

15. Système (24) selon la revendication 14, dans lequel l'intervalle de temps entre deux opérations de régulation consécutives lors d'une augmentation de l'intensité d'éclairage est inférieur à celui lors d'une réduction de l'intensité d'éclairage.

# Fig. 1

14a
14b
18
16d
F
16c
12b
16b
12a
16a
10

# Fig. 2

22c
22d
22b
22a
20

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180168020 A1